# FASCICULE DE BREVET EUROPEEN

(11) **EP 1 805 355 B1**
(45) Date de publication et mention de la délivrance du brevet: **29.09.2010**
(21) Numéro de dépôt: 05814922.0
(22) Date de dépôt: 26.10.2005
(51) Int. Cl.: D01F 9/12, D01F 1/10, D01D 5/00

(54) **FIBRES COMPOSITES COMPRENANT AU MOINS DES NANOTUBES DE CARBONE, LEUR PROCEDE D'OBTENTION ET LEURS APPLICATIONS**
VERBUNDFASERN, DIE MINDESTENS KARBON-NANORÖHRCHEN ENTHALTEN, HERSTELLUNGSVERFAHREN DAFÜR UND VERWENDUNG DAVON
COMPOSITE FIBRES INCLUDING AT LEAST CARBON NANOTUBES, METHODS FOR OBTAINING SAME AND USE THEREOF

(30) Priorité: 29.10.2004 FR 0411604
(43) Date de publication de la demande: 11.07.2007
(73) Titulaire: CENTRE NATIONAL DE LA RECHERCHE SCIENTIFIQUE (CNRS), 75794 Paris Cedex 16 (FR)
(72) Inventeur: POULIN, Philippe, F-33600 Talence (FR); VAUGIEN, Thibaud, F-31240 L'Union (FR)
(74) Mandataire: Novagraaf Technologies
(86) Numéro de dépôt international: PCT/FR2005/002680
(87) Numéro de publication internationale: WO 2006/048532

(56) Documents cités:
- FR-A- 2 805 179
- FR-A- 2 828 500
- BARISCI J N ET AL: "Properties of Carbon Nanotube Fibers Spun from DNA-Stabilized Dispersions" ADVANCED FUNCTIONAL MATERIALS, vol. 14, no. 2, février 2004 (2004-02), pages 133-138, XP002332309

## Description

La présente invention concerne des fibres composites comprenant au moins des nanotubes de carbone, leur procédé d'obtention et leurs applications.

Les fibres naturelles ou synthétiques utilisées comme textiles ou charge de composites sont souvent enduites d'additifs. Cette enduction a pour but de modifier les propriétés de surface de la fibre ou de lui amener une fonctionnalité particulière. Dans certains cas, on emploie le terme ensimage. Par exemple, l'ensimage dit "textile" appliqué sur les filaments en sortie de filière consiste à déposer un agent de liaison assurant la cohésion des filaments entre eux, diminuant l'abrasion et facilitant les manipulations ultérieures (tissage) et évitant la formation de charges électrostatiques. Il existe bien d'autres cas où une fibre doit être recouverte par un composé particulier. Par exemple, il est possible de colorer une fibre tout simplement en l'enduisant de colorants. Une fibre textile, isolante à l'origine, peut être rendue conductrice d'électricité par son enduction avec des polymères conducteurs. Il est possible de parfumer un vêtement en enduisant ses fibres de capsules contenant un parfum. Ce ne sont que quelques exemples parmi une multitude de cas développés industriellement et commercialement disponibles.

L'enduction classique d'une fibre conduit à une couverture uniforme et symétrique de sa surface.

Il serait cependant préférable dans certains cas d'apporter un additif dans une fibre de façon différente c'est-à-dire au coeur de la fibre et non plus en surface. Ces conditions différentes permettraient d'améliorer les propriétés des fibres et de leur conférer de nouvelles fonctions.

Pour la présente invention, l'intérêt sera porté plus particulièrement sur les fibres de nanotubes de carbone.

Les nanotubes de carbone présentent une structure et des propriétés électroniques et mécaniques qui en font des matériaux très prometteurs pour une multitude d'applications : composites, actionneurs électromécaniques, câbles, fils résistants, détecteurs chimiques, stockage d'hydrogène, afficheurs à émission d'électrons, convertisseurs d'énergie, composants électroniques, électrodes, batteries, supports de catalyse, etc.

Il existe plusieurs méthodes pour réaliser des fibres de nanotubes de carbone.

En particulier les nanotubes de carbone, ainsi que d'autres types de particules, peuvent être mis sous forme de rubans ou de fibres par un procédé de filage breveté (Brevet FR2805179). Ce procédé consiste à disperser de façon homogène les nanotubes dans un milieu liquide. La dispersion peut être réalisée dans l'eau en utilisant des tensioactifs qui s'adsorbent à l'interface des nanotubes. Elle peut aussi être obtenue à partir de nanotubes fonctionnalisés, sans utilisation de dispersants. Une fois dispersés, les nanotubes sont recondensés sous forme d'un ruban ou d'une pré-fibre en injectant la dispersion dans un autre liquide qui provoque la coagulation des nanotubes. Cet autre liquide peut être une solution de polymères. Les écoulements mis en jeu sont optimisés de façon à favoriser l'alignement des nanotubes dans la pré-fibre ou le ruban. De plus, les débits et les vitesses d'écoulement permettent aussi de contrôler la section des pré-fibres ou des rubans. La pré-fibre est ensuite séchée pour conduire à une fibre contenant une fraction importante de nanotubes. Les rubans, pré-fibres ou fibres finales, peuvent être traités par des étirements en voie humide de façon à améliorer l'orientation des nanotubes. Ces reformages sont décrits dans le brevet FR 0110611 (publié comme FR 2 828 500). Il est montré dans ce brevet comment des étirements de la fibre, en dynamique ou statique, dans des solvants ayant une plus ou moins bonne affinité pour le polymère coagulant, permettent d'améliorer la structure et les propriétés physiques des fibres.

Les pré-fibres, rubans ou fibres peuvent aussi être lavés par des rinçages qui permettent de désorber partiellement ou totalement certaines espèces adsorbées (polymères coagulants ou tensioactifs notamment).

Les propriétés de ces fibres, comme celles de n'importe quelles fibres, dépendent de façon critique de la nature et de l'arrangement de leurs composants.

Il peut être souhaitable notamment d'apporter dans la fibre un composant additionnel pour améliorer des propriétés ou conférer une fonction particulière (optique, bio-activité, propriétés électriques ou thermiques, propriétés d'oxydoréduction, propriétés catalytiques, propriétés bactéricides, propriétés mécaniques...). Actuellement, ces améliorations ou fonctions ne sont contrôlables que par la nature des molécules utilisées pendant la synthèse des fibres. Ceci pose une sérieuse limitation car il n'est pas évident de combiner une fonction donnée avec les conditions requises pour la fabrication de la fibre. Il serait pourtant idéal d'amener ces additifs pendant la synthèse des fibres car les additifs pourraient alors se trouver au coeur des fibres. Ils seraient ainsi mieux protégés. Ils seraient en contact direct avec la totalité des nanotubes et affecteraient directement les propriétés de la fibre.

Cependant, l'ajout d'additifs moléculaires pendant la synthèse complique très fortement le filage et peut le rendre impossible. Par exemple, une molécule ayant une fonction particulière peut s'avérer gênante pour la coagulation nanotubes ou même pour la stabilité de la dispersion initiale. De même, les molécules destinées à être ajoutées peuvent ne pas être compatibles avec le procédé de filage, si elles ne sont tout simplement pas solubles dans les solvants utilisés.

Pour une ou plusieurs de ces raisons, les molécules ne sont pas ajoutées pendant la fabrication des fibres. Elles doivent être déposées au final sur les fibres une fois fabriquées. Cependant l'enduction post-synthèse, classique dans les technologies de filage et des textiles, présente aussi des limitations car elle ne permet pas d'amener au coeur des fibres un composé particulier. Les additifs restent localisés en surface, ce qui limite leur action et leur effet sur la fibre.

Les inventeurs ont donc mis au point des fibres utilisant le procédé décrit ci-avant et qui permettent de pallier ces inconvénients.

La norme UIPAC définit au sens général les particules colloïdales comme étant des particules dont la taille est comprise entre 1 nanomètre et quelques micromètres. La présente invention se référera à cette définition lorsque le terme « particules colloïdales » sera employé.

A cet effet, les fibres composites comprenant au moins des nanotubes de carbone, selon l'invention, se caractérisent en ce qu'elles comprennent également des particules d'au moins un autre type apportées sous forme colloïdale et mélangées intimement et de façon homogène aux dits nanotubes de carbone de manière à être dispersées uniformément dans l'intégralité du corps de ladite fibre.

Préférentiellement, lesdites particules sont des particules de polymères, des particules minérales, des particules métalliques, des particules d'oxyde métallique, des gouttes d'émulsion et/ou des capsules de molécules actives.

En particulier, lesdits polymères sont choisis parmi les polymères électriquement conducteurs, les polymères électriquement isolants, les polymères thermodurcissables et/ou les polymères thermoplastiques.

Plus particulièrement, lesdits polymères sont choisis parmi la cellulose, les résines phénoliques et/ou le PAN.

En particulier, lesdites particules minérales sont choisies parmi l'alumine, la silice, le dioxyde de titane, le carbonate de calcium, le carbure de silicium, le sulfure de tungstène, le nitrure de bore et/ou les plaquettes d'argile.

En particulier, lesdites particules métalliques et lesdites particules d'oxyde métallique sont choisies parmi le platine, le palladium et/ou les particules magnétiques à base de fer et/ou de cobalt.

En particulier, lesdites gouttes d'émulsion sont choisies parmi les monomères liquides d'une substances destinée à polymériser sous forme solide.

En particulier, lesdites molécules actives sont choisies parmi les médicaments, les parfums, les bactéricides et/ou les pesticides.

Enfin, les fibres selon l'invention sont obtenues par :
- la dispersion desdites particules colloïdales avec les nanotubes dans un solvant à l'aide éventuellement d'un agent tensioactif, et
- l'injection de la solution de dispersion ainsi obtenue à travers au moins un orifice débouchant dans un écoulement d'une solution externe, de préférence, de viscosité supérieure à celle de ladite dispersion, les viscosités étant mesurées dans les mêmes conditions de température et de pression, de manière à provoquer une agrégation desdites particules et desdits nanotubes en fibres ou rubans en déstabilisant les dispersions de particules et un éventuel alignement desdites particules et desdits nanotubes.

L'élément principal de l'invention consiste à amener les additifs sous forme colloïdale, c'est-à-dire sous forme de particules dont la taille est comprise entre quelques nanomètres et quelques microns. Les additifs ne sont pas amenés sous forme moléculaire. L'apport sous forme colloïdale présente des avantages techniques significatifs.

L'ajout du composé est effectué dès l'étape de dispersion des nanotubes. Les conditions physico-chimiques du filage (dispersion et coagulation) ne sont pas affectées car les additifs sont apportés sous forme colloïdale et non moléculaire.

En particulier, les fibres selon l'invention pourront avoir de nombreuses applications dont notamment la réalisation de microélectrodes, de capteurs, d'actionneurs mécaniques, de fibres haute performance, de textiles et/ou de supports de catalyse.

L'invention sera mieux comprise à la lecture de la description détaillée faite ci après en référence aux exemples et aux dessins sur lesquels :
- la figure 1 représente une photographie en microscopie électronique à balayage d'une fibre composite selon l'invention, et
- la figure 2 présente des courbes de traction comparées de fibres de nanotubes de carbone classiques (à gauche) et de fibres composites selon l'invention (à droite).

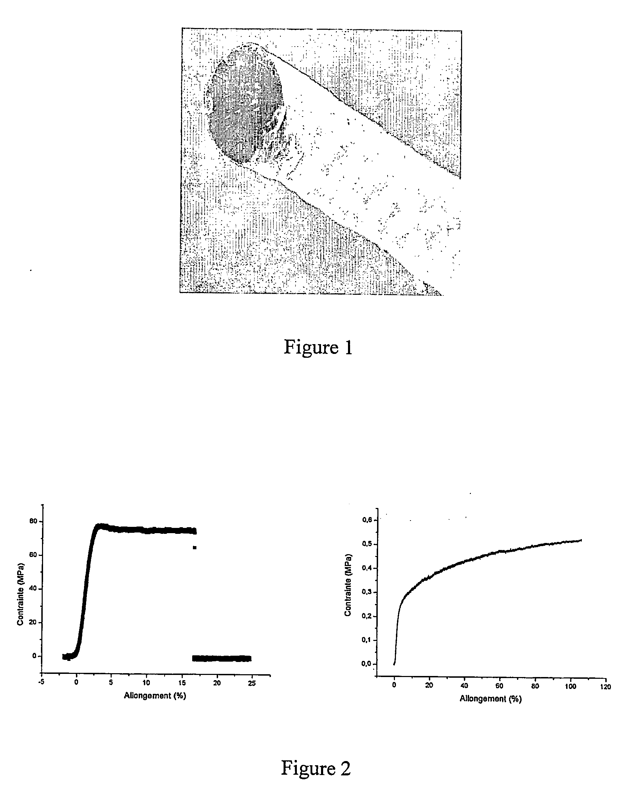

Dans les différents exemples ci-après, des particules colloïdales sont ajoutées à une solution initiale de nanotubes. Ces exemples sont réalisés avec des particules de latex (nano-particules de polystyrène en solution aqueuse) sous forme colloïdale de diamètre 60 nm (exemple 1), ainsi qu'avec des particules de silice de 30 nm (exemple 2), et enfin avec des nano-particules d'argile (exemple 3). La dispersion contient des nanotubes et des particules colloïdales ajoutées. La proportion de colloïdes et de nanotubes, contrôlés par l'expérimentateur, peut être variable. Cette dispersion mixte est ensuite injectée dans un bain de coagulation des nanotubes comme décrit dans le brevet FR2805179. Les nanotubes et les colloïdes coagulent conjointement pour former une pré-fibre humide qui peut subir différents traitements avant d'être séchée. Parmi ces traitements, on peut citer des lavages, des étirements (statique ou dynamique), des torsions, des traitements thermiques ou chimiques. La fibre obtenue est composée de nanotubes et de particules colloïdales intimement mélangés. Elle constitue un composite uniforme. Une photo de microscopie électronique est montrée sur la figure 1. Dans le cas où les particules colloïdales peuvent coaguler et fusionner, comme dans l'exemple de latex faiblement réticulés, le mélange est particulièrement homogène. En effet, dans ce cas, la nature colloïdale des particules ajoutées disparaît lors de leur fusion. Si des particules plus rigides sont utilisées, telles que des particules minérales, métalliques, des polymères fortement réticulés ou des polymères sous leur température de transition vitreuse, le mélange reste homogène mais les particules colloïdales peuvent conserver une certaine intégrité.

De telles fibres sont impossibles à réaliser par ajout direct de polystyrène à l'état moléculaire. Ce dernier étant un polymère insoluble dans l'eau, son addition sous forme moléculaire est incompatible avec les conditions physico-chimiques du filage. Ce système constitue un exemple où la nature chimique de l'additif n'est pas compatible avec le procédé de filage. La présente invention permet de contourner cette incompatibilité. De même, les alkoxydes de silice sont insolubles dans l'eau et leur utilisation nécessiterait de passer par des solutions hydro-alcooliques dans lesquelles les nanotubes sont beaucoup plus difficiles à disperser. Il serait donc considérablement plus difficile de faire une fibre homogène nanotubes/silice par une voie différente que celle ici proposée.

Les différentes étapes du procédé mis en oeuvre pour réaliser les fibres selon l'invention sont, pour tous les exemples ci-après :
- Dispersion de Nanotubes+Particules Colloïdales en proportion contrôlée,
   - Coagulation sans écoulement et obtention d'une pré-fibre ou d'un ruban comprenant des colloïdes et des nanotubes,
   - Traitements éventuels (étirements, torsions, traitements chimiques ou thermiques, lavages), et
- Séchage et obtention de la fibre composite finale colloïdes-nanotubes avec les proportions initiales préservées. Les nanotubes et les colloïdes sont répartis de façon homogène.

### EXEMPLE I

Caractéristiques du filage :
Pré-fibre obtenue par injection d'une solution de nanotubes/colloïdes dans l'écoulement d'une solution de polymère coagulant. Puis séchage de la pré-fibre. La solution de coagulation est choisie car elle induit la floculation des nanotubes mais aussi des particules colloïdales ajoutées, ici des latex (particules de polystyrène 60 nm de diamètre).
Nanotubes : monoparois synthétisées par arc électrique.
Solution de nanotubes : suspensions contenant 0,3 % en masse de nanotubes, 0,3 % de particules colloïdales et 1,2 % de dodécyl sulfate de sodium (dispersant). La suspension est homogénéisée par ultrasons.
Solution de polymère coagulant : solution aqueuse à 5 % en masse de PVA (masse molaire 150 kg et taux d'hydrolyse 88 %).
Débit d'injection de la solution de nanotubes : 50 ml/h à travers un orifice cylindrique de 0,5 mm de diamètre.
Vitesse d'écoulement de la solution de PVA : 10 m/min.

La pré-fibre formée dans ces conditions est ensuite trempée dans 3 bains de rinçage à l'eau pure et extraite pour être séchée et densifiée. Sa section est observée en microscopie électronique à balayage. Celle-ci comporte des particules incluses dans le réseau formé par les nanotubes de carbone (voir Figure 1).

Contrairement aux fibres qui ne contiennent pas de latex ajouté, il est difficile de déceler la présence de nanotubes qui sont ici enrobés et dilués dans une matrice polymère plus importante. La fibre a un aspect uniforme caractéristique d'un matériau nano-composite dont les inclusions sont réparties de façon homogène.

La résistivité électrique de la fibre à température ambiante est de 81,2 ohm.cm. Cette valeur dépasse largement la résistivité d'une fibre sans particules de latex. La résistivité d'une fibre sans latex est de 1 ohm.cm (typiquement comparable aux fibres décrites dans le brevet FR0305379). Cette mesure montre bien l'effet de l'inclusion des particules colloïdales qui permettent de diluer les nanotubes conducteurs au sein de la matrice polymérique isolante. Cet effet de dilution peut être mis à profit pour abaisser la conductivité de la fibre mais aussi pour conduire à des fibres de nanotubes très poreuses après élimination chimique ou thermique du polymère. En effet, la dilution des nanotubes conduira à un réseau moins compact lors de l'élimination du polymère. Ce procédé affecte aussi de façon significative les propriétés mécaniques de la fibre (voir Figure 2). La fibre qui contient les latex présente un allongement à la rupture beaucoup plus importante qu'une fibre ne contenant pas de latex (110 % conte 15 %). Par contre la contrainte maximale à la rupture est réduite (0,6 MPa contre 75 MPa). Ces caractéristiques illustrent parfaitement le rôle du polymère. Il rend la fibre plus plastique et déformable mais abaisse son élasticité. D'autres effets peuvent être attendus avec des polymères différents. Il ne s'agit là que d'un exemple qui montre l'influence énorme que peut avoir l'incorporation d'un composé sous forme colloïdale dans une fibre.

### EXEMPLE 2

Caractéristiques du filage :
Pré-fibre obtenue par injection d'une solution de nanotubes et de colloïdes dans l'écoulement d'une solution de polymère coagulant. Puis séchage de la pré-fibre. La solution de coagulation est choisie car elle induit la floculation des nanotubes mais aussi des particules colloïdales ajoutées, ici des particules de silice.
Nanotubes : monoparois synthétisés par arc électrique.
Solution de nanotubes : suspensions contenant 0,7 % en masse de nanotubes, 0,7 % de particules colloïdales et 1,2 % de dodécyl sulfate de sodium (dispersant). La suspension est homogénéisée par ultrasons.
Solution de polymère coagulant : solution aqueuse à 5 % en masse de PVA (masse molaire 150 kg et taux d'hydrolyse 88 %).
Débit d'injection de la solution de nanotubes : 5 ml/h à travers un orifice cylindrique de 0,5 mm de diamètre.
Vitesse d'écoulement de la solution de PVA : 30 ml/min à travers un tube cylindrique de section 8 mm.

La pré-fibre formée dans ces conditions est ensuite trempée dans un bain de rinçage à l'eau pure et extraite pour être séchée et densifiée. Cette fibre comporte du PVA, de la silice et des nanotubes en quantité équivalente. Les particules de silice sont agrégées irréversiblement et forment un réseau uniforme et intimement imbriqué avec le PVA et les nanotubes. Une fibre classique PVA/nanotubes (sans silice) a tendance à regonfler spontanément de façon significative en présence d'eau. La fibre garde une forte affinité pour l'eau à cause de la présence de PVA. En présence de silice, nous observons que la fibre reste hydrophile mais qu'elle ne gonfle plus en présence d'eau. Ce résultat montre que le réseau de particules de particules silice agrégées irréversiblement maintient la structure de l'ensemble et empêche le gonflement de la fibre. Cette différence marquée de comportement illustre bien l'apport que peut avoir un composé additionnel apporté sous forme colloïdale, comme décrit dans la présente invention.

### EXEMPLE 3

Le composé colloïdal est constitué de nanoparticules plaquettaires d'argile.

Caractéristiques du filage :
Pré-fibre obtenue par injection d'une solution de nanotubes et de colloïdes dans l'écoulement d'une solution de polymère coagulant. Puis séchage de la pré-fibre. La solution de coagulation est choisie car elle induit la floculation des nanotubes mais aussi des particules colloïdales ajoutées, ici des nanoparticules d'argile (type laponite).
Nanotubes : monoparois synthétisés par arc électrique.
Solution de nanotubes : suspensions contenant 0,6 % en masse de nanotubes, 0,5 % de particules colloïdales et 1,2 % de sodium dodécyl sulfate (dispersant). La suspension est homogénéisée par ultrasons.
Solution de polymère coagulant : solution aqueuse à 5 % en masse de PVA (masse molaire 150 kg et taux d'hydrolyse 88 %).
Débit d'injection de la solution de nanotubes : 5 ml/h à travers un orifice cylindrique de 0,5 mm de diamètre.
Vitesse d'écoulement de la solution de PVA : 30 ml/min à travers un tube cylindrique de section 8 mm.

Pour l'ensemble de ces exemples et pour l'ensemble des fibres selon l'invention, la proportion relative nanotubes/particules colloïdales est fixée par le manipulateur dès la préparation des solutions. Cette proportion relative peut varier de quelques % dans le cas de l'addition de particules destinées, par exemple, à jouer un rôle catalytique en tant que catalyseur supporté à au moins 80 % (dans la mesure où les colloïdes ajoutés peuvent aussi être filés eux-mêmes en absence de nanotubes) dans le cas précédent.

Ce contrôle est un avantage considérable pour la fabrication de fibres composites.

De plus, l'addition de particules sous forme colloïdale dans les fibres peut permettre d'amener des fonctions nouvelles à la fibre. Par exemple, les particules colloïdales peuvent contenir un agent actif (médicament, bactéricide, parfum, etc.) et conférer ainsi à la fibre des fonctions bien particulières sans qu'il y ait besoin de modifier les nanotubes de carbone.

Bien entendu, différents types très variés de particules colloïdales peuvent être utilisés et mis en jeu dans les fibres selon l'invention. Le choix de celles ci dépendra essentiellement des propriétés recherchées pour les fibres composites finales.

La liste non exhaustive ci-dessous présente différents colloïdes utilisables et les propriétés qu'ils peuvent conférer à la fibre :
- Particules de polymères : fibres composites nanotubes/polymères avec une plus grande fraction de polymère.
   Les particules de polymères peuvent modifier les propriétés mécaniques de la fibre.
   Elles peuvent aussi être composées de polymères (cellulose, PAN) qui, par pyrolyse, donnent du carbone amorphe pour réaliser des fibres composites carbone/nanotubes de carbone.
   Elles peuvent au contraire être composées de polymères qui sont éliminés par traitement thermique pour conduire à des fibres de nanotubes hautement poreuses (les particules éliminées laissent des trous dans la fibre). Les fibres hautement poreuses sont recherchées pour les applications électrochimiques (électrodes, capteurs, actionneurs), l'adsorption de molécules (stockage d'hydrogène, adsorption d'ions pour batteries) et les applications de catalyse.
   Les polymères peuvent être de type conducteur pour améliorer les propriétés électriques de la fibre.
- Particules minérales : fibres composites nanotubes/particules minérales.
   Les particules peuvent être de type alumine, silice, dioxyde de titane, carbonate de calcium. De telles particules peuvent conférer aux fibres, comme dans les composites classiques, de meilleures propriétés mécaniques, une limitation de leur perméabilité à certaines molécules, une meilleure résistance à la température.
- Particules métalliques ou d'oxydes métalliques : fibres composites nanotubes/particules métalliques ou d'oxydes métalliques.
   Les particules peuvent notamment être des nanoparticules magnétiques à base de fer ou de cobalt pour rendre la fibre magnétique.
   Les particules peuvent aussi être des nanoparticules métalliques destinées à catalyser une réaction chimique ou la croissance de nanotubes par CVD au coeur de la fibre.
- Capsules de molécules actives : fibres composites nanotubes/produits encapsulés
   Il existe aujourd'hui de nombreuses technologies d'encapsulation colloïdale pour la protection et libération contrôlée de molécules actives (médicaments, parfums, bactéricides, pesticides...). Les capsules colloïdales peuvent être incorporées au coeur des fibres de nanotubes par ce procédé et leur apporter ainsi des fonctionnalités particulières comme, par exemple, pour des gants contenant des capsules bactéricides. De tels produits existent aujourd'hui pour protéger un utilisateur dont le gant est coupé par un objet infecté (lame, aiguille de seringue). Le gant libère lors de la coupure un bactéricide qui agit instantanément pour protéger l'utilisateur d'une possible infection. Les fibres de nanotubes à haute ténacité sont précisément des systèmes prometteurs pour leur utilisation dans les textiles de vêtements de protection. De telles fonctionnalités constituent donc un avantage supplémentaire pour ce domaine d'application. Un autre exemple peut être donné avec les capsules de parfum. De telles capsules au sein de la fibre sont plus efficaces qu'en surface car leur temps de rétention serait considérablement rallongé. Enfin, est donné à titre d'autre exemple des particules de produits organiques pouvant fondre à une température proche de la température ambiante (capsules de certaines cires). Dues à leur enthalpie, les capsules ont tendance à refroidir la fibre lors d'une élévation d'une température extérieure. De tels textiles ont été développés par la NASA dans les années 90. Ils permettent de faire des vêtements qui limitent la sensation de chaleur lorsqu'une personne passe d'un endroit froid à un endroit chaud. De façon réversible, les capsules lors de la solidification libèrent de la chaleur et limitent la sensation de froid lorsqu'une personne passe d'un endroit chaud à froid. Au contraire, , comme pour les capsules de parfum, des dépôts de telles capsules en surface de fibres ne sont pas idéaux car les particules sont dégradées par frottements ou lors d'un lavage. Il serait bien plus efficace pour la longévité du système que les particules soient au coeur de la fibre.

## Revendications

1. Fibres composites comprenant au moins des nanotubes de carbone, **caractérisées en ce qu'**elles comprennent également des particules d'au moins un autre type apportées sous forme colloïdale et mélangées intimement et de façon homogène aux dits nanotubes de carbone de manière à être dispersées uniformément dans l'intégralité du corps desdites fibres.

2. Fibres selon la revendication 1, **caractérisées en ce que** lesdites particules sont des particules de polymères, des particules minérales, des particules métalliques, des particules d'oxyde métallique, des gouttes d'émulsion et/ou des capsules de molécules actives.

3. Fibres selon la revendication 2, **caractérisées en ce que** lesdits polymères sont choisis parmi les polymères électriquement conducteurs, les polymères électriquement isolants, les polymères thermodurcissables et/ou les polymères thermoplastiques.

4. Fibres selon la revendication 3, **caractérisées en ce que** lesdits polymères sont choisis parmi la cellulose, les résines phénoliques et/ou le PAN.

5. Fibres selon la revendication 2, **caractérisées en ce que** lesdites particules minérales sont choisies parmi l'alumine, la silice, le dioxyde de titane, le carbonate de calcium, le carbure de silicium, le sulfure de tungstène, le nitrure de bore et/ou les plaquettes d'argile.

6. Fibres selon la revendication 2, **caractérisées en ce que** lesdites particules métalliques et lesdites particules d'oxyde métallique sont choisies parmi le platine, le palladium et/ou les particules magnétiques à base de fer et/ou de cobalt.

7. Fibres selon la revendication 2, **caractérisées en ce que** lesdites gouttes d'émulsion sont choisies parmi les monomères liquides d'une substances destinée à polymériser sous forme solide.

8. Fibres selon la revendication 2, **caractérisées en ce que** lesdites molécules actives sont choisies parmi les médicaments, les parfums, les bactéricides et/ou les pesticides.

9. Fibres selon l'une quelconque des revendications 1 à 8, **caractérisée en ce qu'**elles sont obtenues par :
- la dispersion desdites particules colloïdales avec les nanotubes dans un solvant à l'aide éventuellement d'un agent tensioactif, et
- l'injection de la solution de dispersion ainsi obtenue à travers au moins un orifice débouchant dans un écoulement d'une solution externe, de préférence, de viscosité supérieure à celle de ladite dispersion, les viscosités étant mesurées dans les mêmes conditions de température et de pression, de manière à provoquer une agrégation desdites particules et desdits nanotubes en fibres ou rubans en déstabilisant les dispersions de particules et un éventuel alignement desdites particules et desdits nanotubes.

10. Procédé d'obtention des fibres selon l'une quelconque des revendications 1 à 8 **caractérisé en ce qu'**il comprend :
- la dispersion desdites particules colloïdales avec les nanotubes dans un solvant à l'aide éventuellement d'un agent tensioactif, et
- l'injection de la solution de dispersion ainsi obtenue à travers au moins un orifice débouchant dans un écoulement d'une solution externe, de préférence, de viscosité supérieure à celle de ladite dispersion, les viscosités étant mesurées dans les mêmes conditions de température et de pression, de manière à provoquer une agrégation desdites particules et desdits nanotubes en fibres ou rubans en déstabilisant les dispersions de particules et un éventuel alignement desdites particules et desdits nanotubes.

11. Application des fibres selon l'une quelconque des revendications 1 à 9 pour réaliser des microélectrodes, des capteurs, des actionneurs mécaniques, des fibres haute performance, des textiles et/ou des supports de catalyse.

## Claims

1. Composite fibres comprising at least carbon nanotubes, **characterised in that** they also comprise at least one other type of particles provided in colloidal form and intimately and evenly mixed with said carbon nanotubes so as to be evenly dispersed throughout the whole body of said fibres.

2. Fibres according to claim 1, **characterised in that** said particles are particles of polymers, mineral particles, metal particles, metal oxide particles, drops of emulsion and/or capsules of active molecules.

3. Fibres according to claim 2, **characterised in that** said polymers are chosen from among electrically conductive polymers, electrically insulating polymers, thermosetting polymers and/or thermoplastic polymers.

4. Fibres according to claim 3, **characterised in that** said polymers are chosen from among cellulose, phenolic resins and/or PAN.

5. Fibres according to claim 2, **characterised in that** said mineral particles are chosen from among alumina, silica, titanium dioxide, calcium carbonate, silica carbide, tungsten sulphide, boron nitride and/or clay platelets.

6. Fibres according to claim 2, **characterised in that** said metal particles and said metal oxide particles are chosen from among platinum, palladium and/or iron-and/or cobalt-based magnetic particles.

7. Fibres according to claim 2, **characterised in that** said drops of emulsion are chosen from among liquid monomers of a substance designed to polymerise into solid form.

8. Fibres according to claim 2, **characterised in that** said active molecules are chosen from among drugs, perfumes, bactericides and/or pesticides.

9. Fibres according to any one of the claims from 1 to 8, **characterised in that** they are obtained by
- dispersing said colloidal particles with the nanotubes in a solvent, optionally with a surface-active agent, and
- injecting the resulting dispersion solution through at least one orifice opening into a flow of an external solution, preferably having a higher viscosity than that of said dispersion, the viscosities being measured in the same conditions of temperature and pressure, so as to cause an aggregation of said particles and said nanotubes into fibres or ribbons by destabilising the dispersions of particles, and an optional alignment of said particles and said nanotubes.

10. Method of obtaining fibres according to any one of the claims from 1 to 8, **characterised in that** it comprises:
- dispersing said colloidal particles with the nanotubes in a solvent, optionnaly with the help of a surface-active agent, and
- injecting the resulting dispersion solution through at least one orifice opening into a flow of an external solution, preferably having a higher viscosity than that of said dispersion, the viscosities being measured with the same conditions of temperature and pressure, so as to cause an aggregation of said particles and said nanotubes into fibres or ribbons by destabilising the dispersions of particles, and an optional alignment of said particles and said nanotubes.

11. Use of fibres according to any one of the claims from 1 to 9 for making microelectrodes, sensors, mechanical actuators, high-performance fibres, textiles and/or catalysis supports.

## Patentansprüche

1. Verbundstofffasern, zu denen mindestens Kohlenstoffnanoröhren gehören, **dadurch gekennzeichnet, dass** sie mindestens auch einen anderen Partikeltyp enthalten, der in kolloidaler Form vorliegt und vollkommen und gleichmäßig mit besagten Kohlenstoffnanoröhren vermischt ist, so dass er gleichmäßig über den gesamten Körper der besagten Fasern verteilt ist.

2. Fasern gemäß Anspruch 1, **dadurch gekennzeichnet, dass** besagte Partikel Polymerpartikel, Mineralstoffpartikel, Metallpartikel, Metalloxidpartikel, Emulsionstropfen und/oder Kapseln aktiver Moleküle sind.

3. Fasern gemäß Anspruch 2, **dadurch gekennzeichnet, dass** besagte Polymere unter elektrisch leitfähigen Polymeren, elektrisch isolierenden Polymeren, hitzehärtbaren Polymeren und/oder thermoplastischen Polymeren gewählt werden.

4. Fasern gemäß Anspruch 3, **dadurch gekennzeichnet, dass** besagte Polymere unter Zellulose, Phenoplasten und/oder PAN gewählt werden.

5. Fasern gemäß Anspruch 2, **dadurch gekennzeichnet, dass** besagte Mineralstoffpartikel unter Aluminiumoxid, Siliziumoxid, Titandioxid, Kalziumkarbonat, Siliziumkarbid, Wolframsulfid, Bornitrid und/oder Tonmineralplättchen gewählt werden.

6. Fasern gemäß Anspruch 2, **dadurch gekennzeichnet, dass** besage Metall- und Metalloxidpartikel unter Platin, Palladium und/oder magnetischen Partikeln auf Eisen- und/oder Kobalt-Basis gewählt werden.

7. Fasern gemäß Anspruch 2, **dadurch gekennzeichnet, dass** besagte Emulsionstropfen unter flüssigen Monomeren einer zur Polymerisierung im festen Zustand bestimmten Substanz gewählt werden.

8. Fasern gemäß Anspruch 2, **dadurch gekennzeichnet, dass** besagte aktive Moleküle unter Medikamenten, Parfümen, Bakteriziden und/oder Pestiziden gewählt werden.

9. Fasern gemäß einem beliebigen der Ansprüche 1 bis 8, **dadurch gekennzeichnet, dass** sie folgendermaßen erhalten werden :
- Dispergierung besagter kolloidaler Partikel mit den Nanoröhren in ein Lösungsmittel, gegebenenfalls mit einem Tensid, und
- Injektion der erhaltenen Dispersionslösung durch mindestens eine Öffnung in eine fliessende externe Lösung, die bevorzugt eine höhere Viskosität als besagte Dispersion aufweist, wobei die Viskositäten unter gleichen Temperatur- und Druckbedingungen gemessen werden, so dass eine Aggregation besagter Partikel und besagter Nanoröhren in Fasern oder Bänder durch Destabilisierung der Partikeldispersion und gegebenenfalls eine Ausrichtung der besagten Partikel und besagter Nanoröhren erfolgt.

10. Methode zur Erhaltung von Fasern gemäss einem beliebigen der Ansprüche 1 bis 8, **dadurch gekennzeichnet, dass** sie enthält:
- Dispersierung besagter kolloidaler Partikel mit den Nanoröhren in ein Lösungsmittel, gegebenenfalls mit einem Tensid, und
- Injektion der erhaltenen Dispersionslösung durch mindestens eine Öffnung in eine fliessende externe Lösung, die bevorzugt eine höhere Viskosität als besagte Dispersion aufweist, wobei die Viskositäten unter gleichen Temperatur- und Druckbedingungen gemessen werden, so dass eine Aggregation besagter Partikel und besagter Nanoröhren in Fasern oder Bänder durch Destabilisierung der Partikeldispersion und gegebenfalls eine Ausrichtung der besagten Partikel und besagter Nanoröhren erfolgt.

11. Verwendung von Fasern gemäß einem beliebigen der Ansprüche 1 bis 9 zur Fertigung von Mikroelektroden, Sensoren, mechanischen Stellgliedern, Hochleistungsfasern, Textilien und/oder Katalyseträgern.
